# FASCICULE DE BREVET EUROPEEN

(11) **EP 4 293 203 B1**
(45) Date de publication et mention de la délivrance du brevet: **09.10.2024**
(21) Numéro de dépôt: 23178766.4
(22) Date de dépôt: 12.06.2023
(51) Int. Cl.: F01D 25/20

(54) **MODULE DE LUBRIFICATION D'UN POSTE DE LUBRIFICATION D'UNE TURBOMACHINE**
SCHMIERMODUL EINER SCHMIERSTATION EINER STRÖMUNGSMASCHINE
LUBRICATION MODULE FOR A LUBRICATION STATION OF A TURBOMACHINE

(30) Priorité: 17.06.2022 FR 2205930
(43) Date de publication de la demande: 20.12.2023
(73) Titulaire: Safran Transmission Systems, 92700 Colombes (FR)
(72) Inventeur: BADIDI, Abdallah, 77550 MOISSY-CRAMAYEL (FR)
(74) Mandataire: Cabinet Beau de Loménie

(56) Documents cités:
- FR-A1- 3 104 208

## Description

### Domaine technique

Le présent exposé concerne l'alimentation en lubrifiant d'un poste de lubrification de turbomachine, en particulier de turbomachine d'aéronef.

### Technique antérieure

Une turbomachine d'aéronef à double corps et double flux comprend classiquement un corps basse pression comprenant un arbre basse pression et un corps haute pression comprenant un arbre haute pression. Les arbres basse et haute pression s'étendent coaxialement le long d'un axe longitudinal de la turbomachine.

Une telle turbomachine comprend en outre une soufflante qui est entraînée par l'arbre basse pression soit directement, soit par l'intermédiaire d'un réducteur planétaire ou épicycloïdal, comme décrit dans le document FR2817912.

Le réducteur ainsi que les roulements ou paliers ont besoin d'un apport de lubrifiant pour lubrifier et refroidir les engrenages, cannelures, roulements et paliers.

En fonctionnement normal de la turbomachine, l'apport de lubrifiant est assuré par un circuit principal de lubrification comprenant une pompe entraînée mécaniquement par une boite de transmission couplée à l'arbre haute pression, couramment appelée AGB selon le sigle en anglais pour « Accessory Gear Box ».

En mode non opérationnel de la turbomachine, que ce soit dans le cas d'un arrêt de la turbomachine en vol ou en cas d'immobilisation de l'aéronef au sol avec la turbomachine éteinte, une autorotation de la soufflante peut survenir sous l'action du vent. La soufflante est dite en autorotation ou encore en « windmilling » selon l'expression en anglais.

Il en va de même lorsque la turbomachine est à faible régime.

Dans les deux cas, l'arbre haute pression est à l'arrêt ou tourne à vitesse trop faible pour permettre à la pompe, alimentée par le boitier AGB, de fournir le débit de lubrifiant requis dans le circuit principal de lubrification.

Afin de remédier à ce problème, le document FR3020410 propose de délivrer de la puissance mécanique supplémentaire au boitier AGB, pour entraîner la pompe, au moyen d'un prélèvement mécanique auxiliaire sur la soufflante durant cet évènement. Le document FR3104208 divulgue aussi un module de lubrification selon l'art antérieure.

En pratique, en cas d'autorotation de la soufflante au sol, la soufflante est susceptible d'être entraînée dans un sens comme dans l'autre en fonction de la direction de propagation du vent. Or, le boitier AGB est classiquement conçu pour entraîner l'axe de la pompe en rotation suivant son sens utile de fonctionnement dans le cas d'un prélèvement sur l'arbre haute pression. Il s'ensuit que prélever de la puissance mécanique sur la soufflante nécessite l'introduction d'une chaîne cinématique complexe et difficile à intégrer, visant à rendre exploitable une rotation de la soufflante dans le sens contraire au sens conventionnel de rotation de l'arbre haute pression.

Le but de l'invention est de proposer une solution simple permettant d'assurer la lubrification du réducteur quel que soit le sens de rotation de la soufflante.

### Exposé de l'invention

A cet effet, la présente invention concerne un module de lubrification pour au moins un poste de lubrification d'une turbomachine, le module de lubrification comprenant au moins une pompe volumétrique comportant un corps de pompe délimitant une chambre principale configurée pour être en communication fluide avec un circuit principal de lubrification et une chambre auxiliaire configurée pour être en communication fluide avec un circuit auxiliaire de lubrification, et un piston monté mobile dans le corps de pompe entre une configuration inactive et une configuration active, le piston étant configuré pour, en configuration active, effectuer un mouvement de pompage entre un point mort haut et un point mort bas par coopération avec une came d'un arbre de la turbomachine, et, en configuration inactive, ne pas coopérer avec la came de l'arbre de la turbomachine, la pompe volumétrique comportant un élément de rappel configuré pour rappeler le piston vers la configuration active et le piston s'étendant dans la chambre principale de sorte que le remplissage de la chambre principale en fluide de lubrification au-delà d'un seuil prédéterminé amène le piston dans la configuration inactive.

Le module de lubrification est prévu pour alimenter un poste de lubrification en lubrifiant (ou fluide de lubrification, ou plus généralement fluide), le poste de lubrification ayant pour fonction de distribuer le lubrifiant au niveau d'un organe de la turbomachine à lubrifier. Le module de lubrification peut alimenter un ou plusieurs postes de lubrification, ces postes de lubrification appartenant alors à la fois au circuit principal de lubrification et au circuit auxiliaire de lubrification.

Le module de lubrification comprend au moins une pompe volumétrique. Par la suite, et sauf indication contraire, par « un » ou « l' » élément (par exemple pompe volumétrique, poste de lubrification, etc.), on entend « au moins un » ou « l'au moins un » ou encore « chaque » élément. Réciproquement, l'emploi générique du pluriel peut inclure le singulier.

La pompe volumétrique comprend un corps de pompe et un piston. Le corps de pompe définit une chambre principale et une chambre auxiliaire dans chacune desquelles le piston s'étend.

Ainsi, en fonctionnement normal de la turbomachine, le débit de fluide de lubrification est assuré par une pompe de lubrification du circuit principal de lubrification, cette pompe étant alimentée, par exemple, par l'AGB. Cette pompe est dimensionnée pour que le débit de fluide de lubrification soit alors tel que la chambre principale de fluide soit remplie au-delà d'un seuil prédéterminé, ce dont il découle que le piston est en configuration inactive. La lubrification est donc assurée par le circuit principal, via la chambre principale de la pompe volumétrique. En particulier, la pression dans la chambre principale peut être suffisante pour vaincre la force de l'élément de rappel qui tend, quand à lui, à rappeler le piston vers la configuration active.

Inversement, lorsque le débit de fluide de lubrification et donc le remplissage de la chambre principale en fluide de lubrification est inférieur au seuil prédéterminé, le piston, sous l'action de l'élément de rappel, est rappelé vers la configuration active. Dans cette configuration active, le piston effectue un mouvement de pompage entre un point mort haut et un point mort bas par coopération avec la came d'un arbre de la turbomachine. Ce mouvement de pompage permet l'apport en fluide de lubrification par pompage du fluide de lubrification dans le circuit, via la chambre auxiliaire.

La chambre principale forme donc une chambre d'activation de la pompe volumétrique, dont le remplissage conditionne le fait que le piston se trouve en configuration active ou en configuration inactive.

En configuration active, l'association de la came et du piston permet de transformer un mouvement de rotation de l'arbre de la turbomachine en un mouvement de pompage du piston dans le corps de pompe, ce qui permet l'apport en fluide de lubrification que l'arbre de la turbomachine tourne dans un sens ou dans l'autre. Le mouvement de pompage peut être un mouvement de translation du piston dans le corps de pompe.

En outre, grâce au fait que la même pompe volumétrique gère, via la chambre principale et la chambre auxiliaire, l'alimentation en lubrifiant du poste de lubrification dans toutes les conditions de fonctionnement de la turbomachine, il est possible de mieux contrôler le débit de lubrifiant vers le poste de lubrification.

Dans certains modes de réalisation, en configuration active, le piston est configuré pour pomper le fluide à travers la chambre auxiliaire. Le mouvement de pompage peut donc être un mouvement d'aller-retour du piston dans la chambre auxiliaire.

Dans certains modes de réalisation, la configuration active correspond à une phase d'autorotation d'une soufflante de la turbomachine ou à une phase de rotation au ralenti de la turbomachine. Lorsque la turbomachine est à l'arrêt ou que la turbomachine est au ralenti (en anglais « idle » ou « ground idle »), l'arbre haute pression est à l'arrêt ou tourne à vitesse trop faible pour permettre au circuit principal de fournir le débit de lubrifiant requis.

Dans certains modes de réalisation, le module de lubrification comprend un réservoir intermédiaire disposé sur le circuit auxiliaire de lubrification, entre le poste de lubrification et la pompe volumétrique dans le sens de circulation du fluide de lubrification. En d'autres termes, le réservoir intermédiaire est en aval du poste de lubrification et en amont de la pompe volumétrique, les termes « amont » et « aval » étant définis par rapport au sens de circulation normal du fluide. Le réservoir intermédiaire permet donc d'assurer une alimentation plus régulière de la chambre auxiliaire de la pompe volumétrique.

Dans certains modes de réalisation, le réservoir intermédiaire est disposé entre le poste de lubrification et une pompe du circuit principal de lubrification dans le sens de circulation du fluide de lubrification. En d'autres termes, le réservoir intermédiaire est en aval du poste de lubrification et en amont de la pompe du circuit principal de lubrification. Le réservoir intermédiaire permet donc d'assurer une alimentation plus régulière de la chambre principale de la pompe volumétrique.

Plus généralement, le réservoir intermédiaire peut être commun au circuit principal de lubrification et au circuit auxiliaire de lubrification.

Dans certains modes de réalisation, le piston est configuré pour, en configuration inactive, empêcher la circulation de fluide à travers la chambre auxiliaire. Par exemple, le piston peut, en configuration inactive, obturer l'entrée et/ou la sortie de la chambre auxiliaire, ou s'interposer entre l'entrée et la sortie de la chambre auxiliaire. Ainsi, en configuration inactive, le circuit auxiliaire de lubrification est interrompu. Dans ces modes de réalisation, en fonctionnement normal de la turbomachine, seul le circuit principal de lubrification alimente le poste de lubrification, ce qui assure la maîtrise du débit de lubrification.

Dans certains modes de réalisation, le piston est configuré pour, en configuration active, empêcher la circulation de fluide à travers la chambre principale. Par exemple, le piston peut, en configuration active, obturer l'entrée et/ou la sortie de la chambre principale, ou s'interposer entre l'entrée et la sortie de la chambre principale. Ainsi, en configuration inactive, le circuit principal de lubrification est interrompu. Par exemple, l'entrée et la sortie de la chambre principale peuvent être disposées de sorte que le piston reste entre l'entrée et la sortie durant toute sa course entre le point mort haut et le point mort bas. Dans ces modes de réalisation, en mode non-opérationnel de la turbomachine, seul le circuit auxiliaire de lubrification alimente le poste de lubrification, ce qui assure la maîtrise du débit de lubrification.

Dans certains modes de réalisation, la chambre auxiliaire présente un volume inférieur au volume de la chambre principale. Le volume désigne le volume interne de la chambre, accessible au fluide de lubrification. Cela permet une meilleure précision sur le dimensionnement du seuil prédéterminé dans la chambre principale. Par ailleurs, en mode non-opérationnel de la turbomachine, un débit de lubrifiant moindre qu'en fonctionnement normal est fourni, afin de mieux correspondre aux besoins effectifs en lubrification.

Dans certains modes de réalisation, en configuration inactive, le piston est escamoté au-delà du point mort haut et du point mort bas de façon à être à distance de la came. Ainsi, la position du piston dans la configuration inactive peut être située dans le prolongement du mouvement de pompage, mais au-delà des points morts haut et bas de sorte que le piston ne coopère plus avec la came, typiquement en étant à distance de la came. La construction de la pompe volumétrique permettant les configurations active et inactive du piston est donc particulièrement simple.

Le présent exposé concerne également un ensemble de lubrification comprenant un module de lubrification tel que précédemment décrit et une came configurée pour être montée sur un arbre de turbomachine et pour coopérer avec le piston du module de lubrification.

Dans certains modes de réalisation, la came comprend au moins trois points haut et trois points bas. Par exemple, chaque point haut correspond au point mort haut du piston et chaque point bas correspond au point mort bas du piston. La came comprend donc une alternance de points morts hauts et bas dont le nombre peut être dimensionné en fonction de la fréquence d'aller-retour souhaitée pour le piston, donc en fonction du débit de pompage souhaité en configuration active.

Le présent exposé concerne également une turbomachine d'aéronef comprenant au moins un arbre et au moins un ensemble de lubrification tel que précédemment décrit, dont la came est solidaire en rotation de l'au moins un arbre. Ainsi, l'arbre et la came tournent ensemble. La came peut être prévue comme une pièce distincte de l'arbre et assemblée à l'arbre, ou bien formée par un usinage de l'arbre.

Dans certains modes de réalisation, la turbomachine comprend au moins trois pompes volumétriques, les trois pompes volumétriques étant disposées en décalage de phase autour de l'arbre. Chaque pompe volumétrique peut avoir les caractéristiques précitées. Le décalage de phase signifie que les pistons des pompes volumétriques sont, à un instant donné, à des positions différentes. Le décalage de phase peut être obtenu de plusieurs façons alternatives les unes aux autres ou complémentaires les unes des autres, par exemple : agencement des pompes volumétriques autour d'une même came, à des positions angulaires qui ne correspondent pas à une période de la came; agencement des pompes volumétriques autour de cames différentes, ces cames étant en décalage de phase les unes par rapport aux autres. Le fait de prévoir au moins trois pompes volumétriques en décalage de phase et qui alimentent le même circuit auxiliaire permet de lisser le débit de lubrifiant dans ce circuit auxiliaire, afin de le rendre plus régulier.

Dans certains modes de réalisation, l'arbre est un arbre d'un réducteur de la turbomachine.

### Brève description des dessins

D'autres caractéristiques et avantages de l'objet du présent exposé ressortiront de la description suivante de modes de réalisation, donnés à titre d'exemples non limitatifs, en référence aux figures annexées.
La figure 1 est une vue schématique en demi-coupe longitudinale d'une turbomachine.
La figure 2 illustre, en perspective et en arraché, un ensemble de lubrification selon un mode de réalisation.
La figure 3 est une vue de face, en coupe transversale selon le plan III-III de la figure 2, d'un ensemble de lubrification selon un mode de réalisation, lorsque le piston est en configuration inactive.
La figure 4 est une vue de face, en coupe transversale selon le plan III-III de la figure 2, de l'ensemble de lubrification de la figure 3, lorsque le piston est en configuration active et au point mort bas.
La figure 5 est une vue de face, en coupe transversale selon le plan III-III de la figure 2, de l'ensemble de lubrification de la figure 3, lorsque le piston est en configuration active et au point mort haut.
La figure 6 illustre schématiquement la lubrification dans une turbomachine lorsque le circuit principal de lubrification est opérationnel.
La figure 7 illustre schématiquement la lubrification dans une turbomachine lorsque le circuit auxiliaire de lubrification est opérationnel.
La figure 8 est une partie de coupe axiale de turbomachine comprenant un réducteur épicycloïdal.
La figure 9 est une partie de coupe axiale de turbomachine comprenant un réducteur planétaire.

### Description détaillée

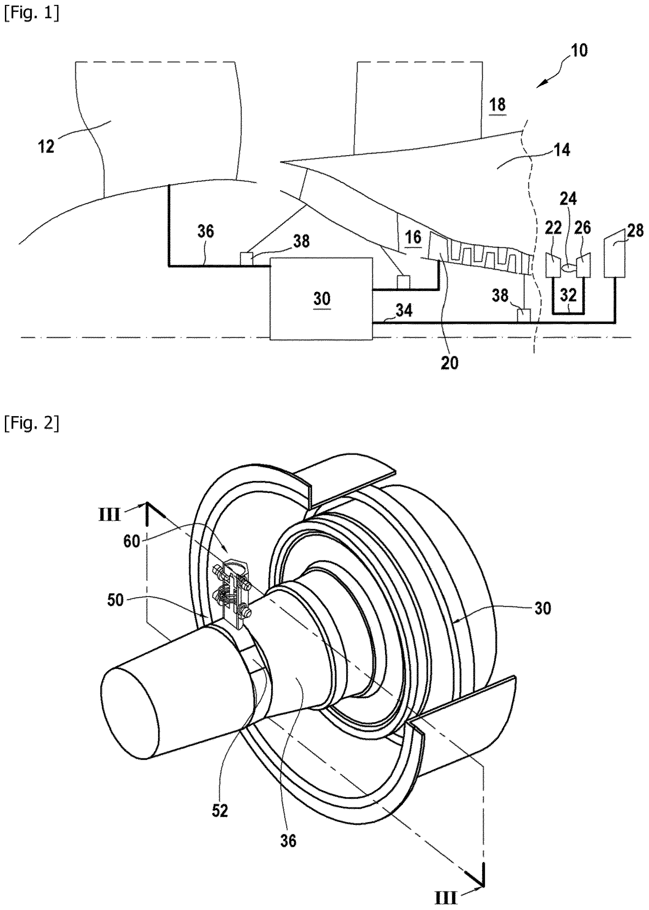

Une turbomachine 10 pour aéronef selon un mode de réalisation est représentée schématiquement sur la figure 1, en demi-coupe longitudinale partielle. En l'occurrence, la turbomachine 10 est un turboréacteur à double corps et double flux. En effet, la turbomachine 10 comprend un propulseur 12, en l'occurrence une soufflante, de préférence unique, un carter 14 interne disposé en aval du propulseur 12 et séparant une veine primaire 16 d'une veine secondaire 18. Un compresseur basse pression (compresseur BP) 20, un compresseur haute pression (compresseur HP) 22, une chambre de combustion 24, une turbine haute pression (turbine HP) 26 et une turbine basse pression (turbine BP) 28 sont agencés dans la veine primaire 16, de l'amont vers l'aval. Du fait que la turbomachine 10 est à double corps, elle comporte deux ensembles tournants cinématiquement indépendants, à savoir d'une part un corps haute pression (corps HP), comprenant le compresseur HP 22 et la turbine HP 26, et d'autre part un corps basse pression (corps BP) comprenant le compresseur BP 20 et la turbine BP 28. Chaque compresseur 20, 22 est entraîné directement ou indirectement par la turbine 26, 28 du corps correspondant, les turbines 26, 28 étant mises en mouvement par les gaz de combustion issus de la chambre de combustion 24.

Toutefois, le présent exposé est transposable au cas d'une turbomachine à simple corps. L'unique corps aurait la fonction du corps HP pour le fonctionnement de la turbomachine, mais son rôle par rapport au réducteur 30 décrit ci-après serait celui du corps BP. Par ailleurs, le présent exposé est transposable au cas où le propulseur 12 n'est pas une soufflante, mais une hélice.

Le carter 14 est fixe dans le référentiel de la turbomachine et a fortiori de l'aéronef, et les parties tournantes, à savoir les roues aubagées mobiles du propulseur 12, des compresseurs 20, 22 et des turbines 26, 28, tournent par rapport au carter 14.

La rotation de la turbine HP 26 entraîne le compresseur HP 22 via un arbre HP 32. Le compresseur HP 22 et la turbine HP 26 sont donc cinématiquement dépendants l'un de l'autre et, en particulier ici, tournent à la même vitesse. L'arbre HP 32 peut être soutenu par rapport au carter par au moins un palier, par exemple un premier palier, typiquement un roulement à billes, par rapport au carter et un deuxième palier, typiquement un palier à rouleaux, par rapport au carter.

Par ailleurs, dans ce mode de réalisation, la turbine BP 28 entraîne en rotation le compresseur BP 20. La turbine BP 28 entraîne également en rotation le propulseur 12. Plus précisément, la turbomachine 10 comprend une transmission, ici un réducteur 30, couplée à la turbine BP 28 via un arbre de turbine BP 34 et au propulseur 12 via un arbre de propulseur 36. Dans ce mode de réalisation, l'arbre de turbine BP 34 est agencé coaxialement à l'intérieur de l'arbre HP 32. Des paliers 38 peuvent être prévus pour soutenir l'arbre de turbine BP 34 et/ou l'arbre de propulseur 36.

Ainsi, comme illustré sur la figure 1, le réducteur 30 est couplé au propulseur 12 et au compresseur BP 20 afin de modifier le rapport de transmission de vitesse de rotation entre la turbine BP 28 et d'une part le propulseur 12, d'autre part le compresseur BP 20.

Le réducteur 30, mais aussi d'autres organes tels que les paliers précités, nécessitent une lubrification. A cet effet, selon un mode de réalisation, la turbomachine 10 comprend au moins un ensemble de lubrification 50, tel qu'illustré sur la figure 2. L'ensemble de lubrification 50 comprend une came 52 montée sur un arbre de la turbomachine 10, en l'occurrence l'arbre de propulseur 36. La came 52 peut être une pièce distincte de l'arbre de propulseur 36 ou bien intégrée à l'arbre de propulseur 36, typiquement formée par une section non circulaire de l'arbre de propulseur 36. Dans ces différents exemples, la came 52 est solidaire en rotation de l'arbre de propulseur 36.

L'ensemble de lubrification 50 comprend par ailleurs un module de lubrification 60 qui est représenté plus en détail sur les figures suivantes.

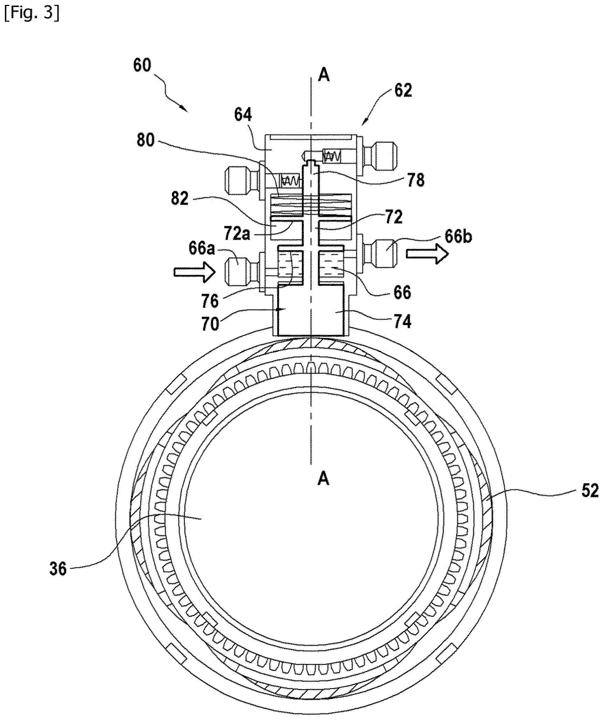

La figure 3 illustre en coupe transversale le module de lubrification 60 selon un mode de réalisation.

Comme indiqué précédemment, le module de lubrification 60 comprend au moins une pompe volumétrique 62 comprenant un corps de pompe 64 et un piston 70 monté mobile dans le corps de pompe 64. Par exemple, le piston 70 peut être mobile en translation selon une direction longitudinale A-A, qui peut être la direction dans laquelle le corps de pompe 64 s'étend. En l'espèce, la direction longitudinale A-A correspond à une direction radiale de la turbomachine 10. Le corps de pompe 64 peut être fixe par rapport à la turbomachine dans son ensemble, par exemple fixe par rapport au carter 14.

Le corps de pompe 64 définit une chambre principale 66 configurée pour être en communication fluide avec un circuit principal de lubrification qui sera décrit ultérieurement. A cet effet, la chambre principale 66 peut être munie d'un orifice d'entrée 66a et d'un orifice de sortie 66b. L'orifice d'entrée 66a et l'orifice de sortie 66b peuvent être prévus à des positions différentes le long de la direction longitudinale A-A.

Le piston 70 s'étend dans la chambre principale 66. Par exemple, le piston 70 peut comprendre une tige 72, longitudinale, et un palet principal 76, solidaire en translation de la tige 72 et configuré pour coulisser longitudinalement dans la chambre principale 66. En section, le palet 76 épouse la forme de la chambre principale 66.

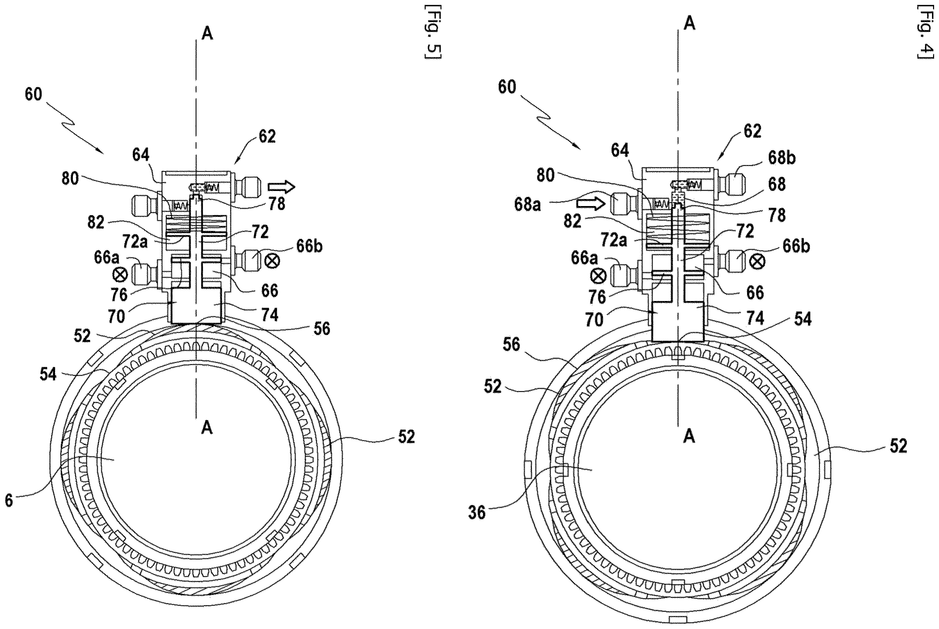

Par ailleurs, le corps de pompe 64 définit une chambre auxiliaire 68, davantage visible sur la figure 4. La chambre auxiliaire 68 est configurée pour être en communication fluide avec un circuit auxiliaire de lubrification qui sera décrit ultérieurement. A cet effet, la chambre auxiliaire 68 peut être munie d'un orifice d'admission 68a et d'un orifice de refoulement 68b. L'orifice d'admission 68a et l'orifice de refoulement 68b peuvent être prévus à des positions différentes le long de la direction longitudinale A-A. En outre, comme illustré, l'orifice d'admission 68a et/ou l'orifice de refoulement 68b peuvent être munis de clapets anti-retour afin de contraindre le sens de circulation du fluide depuis l'orifice d'admission 68a vers la chambre auxiliaire 68 et/ou depuis la chambre auxiliaire 68 vers l'orifice de refoulement 68b, respectivement.

Le piston 70 s'étend dans la chambre auxiliaire 68. Par exemple, le piston 70 peut comprendre un palet auxiliaire similaire au palet principal 76, solidaire en translation de la tige 72 et configuré pour coulisser longitudinalement dans la chambre auxiliaire 68. Alternativement, comme illustré sur les figures 3 et 4, la chambre auxiliaire 68 peut être dimensionnée de façon à épouser la section de la tige 72 à une extrémité 78 de celle-ci. En d'autres termes, dans le mode de réalisation illustré, l'extrémité 78 de la tige 72 elle-même fait office de palet auxiliaire.

L'extrémité opposée du piston 70, c'est-à-dire ici du côté de la came 52, forme une portion d'entraînement 74.

Dans ce mode de réalisation, la chambre auxiliaire 68 présente un volume inférieur au volume de la chambre principale 66. D'autres configurations sont toutefois envisagées.

Par ailleurs, la pompe volumétrique 62 comprend un élément de rappel 80. L'élément de rappel 80 peut être un ressort, typiquement monté en compression ou en tension, ou tout autre élément apte à exercer une force de rappel (système magnétique, élément élastique, etc.). L'élément de rappel 80 est ici prévu dans une cavité 82 dédiée du corps de pompe 64. L'élément de rappel 80 est configuré pour rappeler le piston 70, par exemple en prenant appui d'une part sur une paroi de la cavité 82, d'autre part sur une partie du piston telle qu'une collerette 72a. D'autres montages sont bien entendu possibles : par exemple, l'élément de rappel pourrait être monté en compression entre la portion d'entraînement 74 et le fond de l'alésage correspondant du corps de pompe 64, sans cavité 82 dédiée.

Dans ce mode de réalisation, l'élément de rappel 80 est prévu pour rappeler le piston 70 vers la came 52, c'est-à-dire vers le bas dans l'orientation de la figure 3.

Bien que la chambre principale 66, la cavité 82 et la chambre auxiliaire 68 soient ici prévues alignées dans cet ordre selon la direction longitudinale A-A, tout autre ordre ou agencement de ces chambres et cavité est envisageable.

Sur la figure 3, le piston 70 est représenté en configuration dite inactive. En configuration inactive, le piston 70 ne coopère pas avec la came 52. En effet, comme on peut le voir sur la figure 3, le piston 70, et plus particulièrement sa portion d'entraînement 74, est à distance de la came 52. Par ailleurs, dans cette configuration inactive, le piston 70, et plus particulièrement l'extrémité 78, empêche la circulation de fluide à travers la chambre auxiliaire 68, ici en obturant l'orifice d'admission 68a.

Le piston 70 est maintenu en configuration inactive grâce au fait que la chambre principale 66 est remplie en fluide de lubrification au-delà d'un seuil prédéterminé. Pour ce faire, la pression du fluide de lubrification qui s'exerce sur le palet principal 76 surmonte la force de l'élément de rappel 80 suffisamment pour déplacer le piston 70 jusqu'à un point où il n'est plus en contact avec la came 52. De manière plus générale, l'élément de rappel 80 et le remplissage de la chambre principale 66 exercent, sur le piston 70, des actions antagonistes. En configuration inactive, l'orifice d'entrée 66a et l'orifice de sortie 66b de la chambre principale 66 se trouvent du même côté du palet 76, de sorte que le fluide peut s'écouler de l'orifice d'entrée 66a à l'orifice de sortie 66b à travers la chambre principale 66. Le seuil prédéterminé de remplissage peut correspondre au seuil à partir duquel le palet 76 permet l'écoulement entre l'orifice d'entrée 66a et l'orifice de sortie 66b.

Inversement, le fait que la chambre principale 66 soit remplie en-dessous du seuil prédéterminé traduit le fait que la pression du fluide sur le palet principal 76 n'est plus suffisante pour vaincre la force de l'élément de rappel 80, et l'élément de rappel 80 rappelle le piston 70 vers la came 52, jusqu'à un point où le piston 70 coopère avec la came 52. Le piston 70 est alors dit en configuration active. Cette configuration est illustrée sur les figures 4 et 5.

La description qui précède illustre donc le fait que le piston 70 est mobile, dans le corps de pompe 64, entre une configuration inactive et une configuration active. En outre, l'élément de rappel 80 rappelle le piston 70 vers la configuration active.

En configuration active, le piston 70 est configuré pour effectuer un mouvement de pompage entre un point mort haut et un point mort bas. Ainsi, la configuration active correspond à un intervalle de positions du piston 70, ici le long de la direction longitudinale A-A.

La figure 4 illustre plus particulièrement la situation où le piston 70 est au point mort bas. La portion d'entraînement 74 est en contact avec la came 52, et plus particulièrement avec un point bas 54 de la came 52. Le contact entre la portion d'entraînement 74 et la came 52 peut être direct, comme illustré, ou indirect, par exemple via une pièce roulante permettant de limiter les frottements entre la came 52 et la portion d'entraînement 74.

En l'espèce, la came 52 comprend sur sa surface extérieure, en section transversale à son axe de rotation, une succession de points bas 54 et de points hauts 56, les points bas 54 étant plus proches de l'axe de rotation de la came 52 que les points hauts. La surface extérieure de la came 52 passe, typiquement de manière lissée, d'un point bas 54 à un point haut 56. En l'occurrence, la came 52 comprend une pluralité de lobes radialement saillants (ou plus généralement saillants dans la direction longitudinale A-A), chaque lobe formant en son sommet un point haut 56, tandis que le creux entre deux lobes successifs forme un point bas 54. Bien que quatre lobes soient représentés en l'espèce, correspondant à quatre points bas 54 et quatre points hauts 56, un nombre quelconque de points bas 54 et points hauts 56 peut être envisagé, notamment au moins deux voire au moins trois points bas 54 et trois points hauts 56. Chaque point bas 54 correspond au point mort bas du piston 70. De même, chaque point haut 56 correspond au point mort haut du piston 70, comme il sera exposé en référence à la figure 5.

Toujours en référence à la figure 4, lorsque le piston 70 est au point mort bas, l'extrémité 78 n'empêche plus le fluide de lubrification de s'écouler dans la chambre auxiliaire 68. En effet, l'extrémité 78 se trouve en-deçà de l'orifice d'admission 68a. En d'autres termes, l'orifice d'admission 68a et l'orifice de refoulement 68b se trouvent du même côté de l'extrémité 78.

La figure 5 illustre plus particulièrement la situation où le piston 70 est au point mort haut, suite à une rotation de la came 52. La portion d'entraînement 74 est en contact avec la came 52, et plus particulièrement avec un point haut 56 de la came 52. La came 52 repousse ainsi le piston 70 vers le corps de pompe 64, contre la force de l'élément de rappel 80 qui tend à maintenir le piston 70 en contact avec la came 52.

Ainsi, en configuration active, le piston 70 oscille, par coopération avec la came 52 et au gré de la rotation de la came 52, entre le point mort bas (figure 4) et le point mort haut (figure 5). Cela définit un mouvement de pompage et fait de la pompe volumétrique 62 une pompe volumétrique oscillante. Lorsque le piston 70 est au point mort bas, du fait des clapets anti-retour, il se crée un vide partiel dans la chambre auxiliaire 68. Le clapet de l'orifice d'admission 68a s'ouvre, laissant passer le fluide qui est aspiré dans l'espace créé. Puis, sous l'effet de la came 52, le piston 70 est repoussé vers le point mort haut. L'espace disponible au fluide dans la chambre auxiliaire 68 s'en trouve réduit, la pression augmente, forçant le fluide à se déplacer. C'est alors au tour du clapet de l'orifice de refoulement 68b de s'ouvrir pour permettre l'évacuation du fluide de lubrification pompé. En configuration active, le piston 70 est donc configuré pour pomper le fluide à travers la chambre auxiliaire 68.

Comme illustré sur les figures 4 et 5, en configuration active, le piston 70 empêche la circulation de fluide à travers la chambre principale 66. Le point mort haut et le point mort bas peuvent être dimensionnés tels que lorsque le piston 70 est entre le point mort haut et le point mort bas, le palet principal 76 se trouve entre l'orifice d'entrée 66a et l'orifice de sortie 66b, interrompant ainsi la circulation de fluide à travers la chambre principale 66, même si cette dernière est déjà théoriquement faible ou interrompue par ailleurs (sans quoi le piston 70 ne serait pas en configuration active, pour les raisons exposées précédemment).

Il ressort des figures 3 à 5 qu'en configuration inactive, le piston 70 est escamoté au-delà du point mort haut et du point mort bas de façon à être à distance de la came 52. En l'espèce, en configuration inactive, le piston 70 est davantage rentré dans le corps de pompe 64 (c'est-à-dire davantage vers le haut dans l'orientation des figures 3 à 5) qu'il ne l'est lorsqu'il est en configuration active.

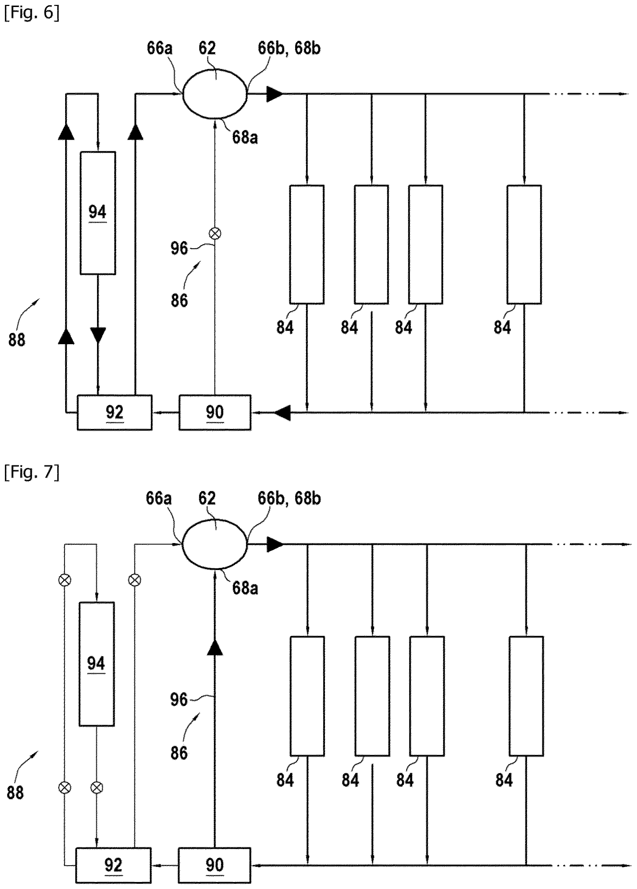

Les figures 6 et 7 représentent schématiquement l'intégration d'un tel module de lubrification dans un système de lubrification de turbomachine.

La figure 6 illustre au moins un poste de lubrification 84, en l'espèce une pluralité de tels postes, typiquement en parallèle les uns des autres. Ces postes de lubrification 84 sont alimentés en lubrifiant par un circuit principal de lubrification 86 et un circuit auxiliaire de lubrification 88.

Dans ce mode de réalisation, le module de lubrification 50 comprend un réservoir intermédiaire 90. Chaque poste de lubrification 84 est connecté à une sortie de la pompe volumétrique 62, en l'occurrence à la fois l'orifice de sortie 66b et l'orifice de refoulement 68b (qui sont ici confondus sur le schéma par souci de clarté). Par ailleurs, les récupérations de lubrifiant sur chacun des postes de lubrification 84 convergent vers le réservoir intermédiaire 90. Dans ce mode de réalisation, la partie de circuit qui s'étend à partir d'un tronçon commun à la sortie de l'orifice de sortie 66b et l'orifice de refoulement 68b, et jusqu'au réservoir intermédiaire 90 compris, est commune au circuit principal de lubrification 86 et au circuit auxiliaire de lubrification 88.

Le circuit principal de lubrification 86 comprend par ailleurs une pompe 92, entraînée par la turbomachine et configurée pour alimenter la chambre principale 66 de la pompe volumétrique 62, via l'orifice d'entrée 66a. Au besoin, un réservoir 94 peut être prévu sur le circuit principal de lubrification 86.

Le circuit auxiliaire de lubrification 88 comprend une conduite 96 s'étendant du réservoir 90 à l'orifice d'admission 68a.

Ainsi, le réservoir intermédiaire 90 est disposé sur le circuit auxiliaire de lubrification 88, entre le poste de lubrification 84 et la pompe volumétrique 62 dans le sens de circulation du fluide de lubrification. Par ailleurs, le réservoir intermédiaire 90 est disposé entre le poste de lubrification 84 et la pompe 92 du circuit principal de lubrification 86 dans le sens de circulation du fluide de lubrification.

La figure 6 illustre la configuration inactive du piston 70 : la turbomachine est en régime suffisant pour alimenter la pompe 92, qui fournit donc un débit et une pression suffisante pour le remplissage de la chambre principale 66 au-delà du seuil prédéterminé. Les postes de lubrification 84 sont donc alimentés, via la chambre principale 66, par du fluide de lubrification en provenance de la pompe 92. Par ailleurs, comme on l'a vu en référence à la figure 3, le piston 70 empêche la circulation de fluide à travers la chambre auxiliaire 68. Par suite, aucun fluide ne s'écoule par la conduite 96.

La figure 7 illustre, à l'inverse, la configuration active du piston 70 : le régime de la turbomachine n'est pas suffisant pour alimenter la pompe 92. En d'autres termes, la configuration active correspond à une phase d'autorotation d'une soufflante de la turbomachine ou à une phase de rotation au ralenti de la turbomachine. Dans ces conditions, la pompe 92 est sensiblement inactive, ou du moins son action ne permet pas d'alimenter les postes de lubrification 84 en lubrifiant. Son action ne permet donc pas non plus de remplir la chambre principale 66 au-delà du seuil prédéterminé. Par suite, c'est le mouvement de pompage du piston 70, sous l'action de l'autorotation ou du ralenti du propulseur 12, qui génère un écoulement de lubrifiant dans la conduite 96, et donc dans l'ensemble du circuit auxiliaire de lubrification 88. Les postes de lubrification 84 sont ainsi alimentés convenablement.

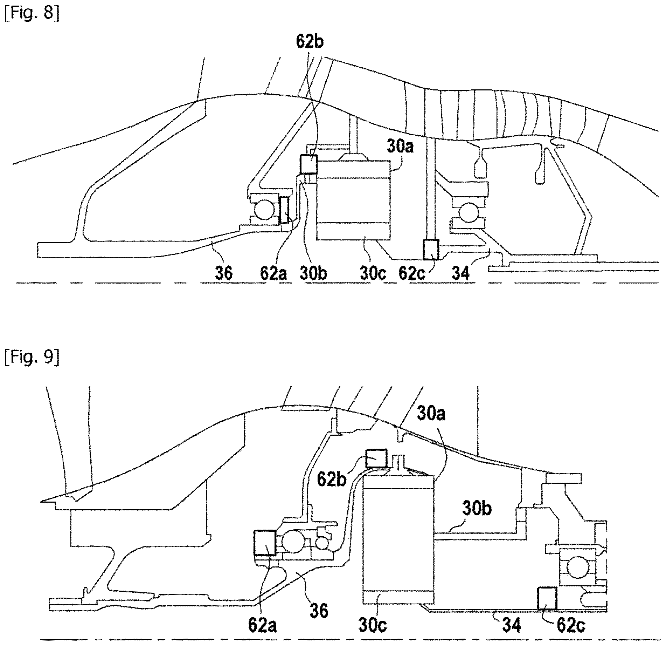

La figure 8 illustre plusieurs implantations possibles d'une pompe volumétrique 62 dans une turbomachine dont le réducteur 30 comprend un train épicycloïdal. Dans un train épicycloïdal, la couronne 30a est fixe et le porte-satellite 30b forme la sortie du réducteur 30. En l'espèce, le porte-satellite 30b est solidaire en rotation de l'arbre de propulseur 36, tandis que le solaire 30c est solidaire en rotation de l'arbre de turbine BP 34.

Comme illustré sur la figure 8, une pompe volumétrique 62a peut être agencée de manière à coopérer avec l'arbre de propulseur 36 (ou plus exactement une came prévue sur cet arbre), une pompe volumétrique 62b peut être agencée de manière à coopérer avec le porte-satellite 30b, et/ou une pompe volumétrique 62c peut être agencée de manière à coopérer avec l'arbre reliant le solaire 30c à l'arbre de turbine 34. Plus généralement, l'arbre avec lequel coopère la pompe volumétrique peut être un arbre du réducteur 30 de la turbomachine 10.

Les pompes volumétriques 62a, 62b et 62c peuvent être prévues comme alternatives les unes aux autres ou en complément les unes des autres. Dans le cas où plusieurs pompes volumétriques sont présentes, par exemple au moins trois pompes volumétriques, lesdites pompes peuvent optionnellement être disposées en décalage de phase autour de l'arbre ou des arbres. Même si les arbres n'ont pas tous la même vitesse de rotation (par exemple l'arbre de propulseur 36 tourne normalement moins vite que l'arbre de turbine BP 34), leurs vitesses de rotation sont en phase du fait même de la structure du réducteur 30. Ainsi, typiquement, le décalage angulaire entre deux pompes volumétriques (ou les cames correspondantes, ou la combinaison des deux), peut être décalé par rapport à une période de l'arbre tournant le plus rapidement.

La figure 9 illustre plusieurs implantations possibles d'une pompe volumétrique 62, de manière analogue à la figure 8 mais dans le cas où le réducteur 30 comprend un train planétaire. Dans un train planétaire, le porte-satellite 30b est fixe et la couronne 30a forme la sortie du réducteur 30. En l'espèce, la couronne 30a est solidaire en rotation de l'arbre de propulseur 36, tandis que le solaire 30c est solidaire en rotation de l'arbre de turbine BP 34.

Comme illustré sur la figure 9, une pompe volumétrique 62a peut être agencée de manière à coopérer avec l'arbre de propulseur 36 (ou plus exactement une came prévue sur cet arbre), une pompe volumétrique 62b peut être agencée de manière à coopérer avec la couronne 30a, et/ou une pompe volumétrique 62c peut être agencée de manière à coopérer avec l'arbre de turbine 34. Plus généralement, l'arbre avec lequel coopère la pompe volumétrique peut être un arbre du réducteur 30 de la turbomachine 10.

Les autres considérations relatives à la figure 8 s'appliquent mutatis mutandis à la figure 9.

Quoique le présent exposé ait été décrit en se référant à un exemple de réalisation spécifique, il est évident que des différentes modifications et changements peuvent être effectués sur ces exemples sans sortir de la portée générale de l'invention. Par exemple, bien qu'on ait décrit un mode de réalisation dans lequel la direction longitudinale A-A correspond à une direction radiale de la turbomachine 10, d'autres agencements sont possibles : selon un autre exemple, le module de lubrification 60 peut être monté de sorte que la direction longitudinale A-A soit parallèle à une direction axiale de la turbomachine 10. Les lobes de la came 52 peuvent alors faire saillie axialement, ou plus généralement dans la direction longitudinale. D'autres directions sont encore possibles. En outre, des caractéristiques individuelles des différents modes de réalisation évoqués peuvent être combinées dans des modes de réalisation additionnels. Par conséquent, la description et les dessins doivent être considérés dans un sens illustratif plutôt que restrictif.

## Revendications

1. Module de lubrification (60) pour au moins un poste de lubrification (84) d'une turbomachine (10), le module de lubrification (60) comprenant au moins une pompe volumétrique (62) comportant un corps de pompe (64) délimitant une chambre principale (66) configurée pour être en communication fluide avec un circuit principal de lubrification (86) et une chambre auxiliaire (68) configurée pour être en communication fluide avec un circuit auxiliaire de lubrification (88), et un piston (70) monté mobile dans le corps de pompe (64) entre une configuration inactive et une configuration active, le piston (70) étant configuré pour, en configuration active, effectuer un mouvement de pompage entre un point mort haut et un point mort bas par coopération avec une came (52) d'un arbre de la turbomachine, et, en configuration inactive, ne pas coopérer avec la came (52) de l'arbre de la turbomachine, la pompe volumétrique (62) comportant un élément de rappel (80) configuré pour rappeler le piston (70) vers la configuration active, et le piston (70) s'étendant dans la chambre principale (66) de sorte que le remplissage de la chambre principale (66) en fluide de lubrification au-delà d'un seuil prédéterminé amène le piston (70) dans la configuration inactive.

2. Module de lubrification selon la revendication 1, dans lequel, en configuration active, le piston (70) est configuré pour pomper le fluide à travers la chambre auxiliaire (68).

3. Module de lubrification selon la revendication 1 ou 2, dans lequel la configuration active correspond à une phase d'autorotation d'une soufflante de la turbomachine (10) ou à une phase de rotation au ralenti de la turbomachine.

4. Module de lubrification selon l'une quelconque des revendications 1 à 3, comprenant un réservoir intermédiaire (90) disposé sur le circuit auxiliaire de lubrification (88), entre le poste de lubrification (84) et la pompe volumétrique (62) dans le sens de circulation du fluide de lubrification.

5. Module de lubrification selon la revendication 4, dans lequel le réservoir intermédiaire (90) est disposé entre le poste de lubrification (84) et une pompe (92) du circuit principal de lubrification (86) dans le sens de circulation du fluide de lubrification.

6. Module de lubrification selon l'une quelconque des revendications 1 à 5, dans lequel le piston (70) est configuré pour, en configuration inactive, empêcher la circulation de fluide à travers la chambre auxiliaire (68).

7. Module de lubrification selon l'une quelconque des revendications 1 à 6, dans lequel le piston (70) est configuré pour, en configuration active, empêcher la circulation de fluide à travers la chambre principale (66).

8. Module de lubrification selon l'une quelconque des revendications 1 à 7, dans lequel la chambre auxiliaire (68) présente un volume inférieur au volume de la chambre principale (66).

9. Module de lubrification selon l'une quelconque des revendications 1 à 8, dans lequel, en configuration inactive, le piston (70) est escamoté au-delà du point mort haut et du point mort bas de façon à être à distance de la came (52).

10. Ensemble de lubrification (50) comprenant un module de lubrification (60) selon l'une quelconque des revendications 1 à 9 et une came (52) configurée pour être montée sur un arbre (36) de turbomachine et pour coopérer avec le piston (70) du module de lubrification (60).

11. Ensemble de lubrification selon la revendication 10, dans lequel la came (52) comprend au moins trois points haut (56) et trois points bas (54), chaque point haut (56) correspondant au point mort haut du piston (70) et chaque point bas (54) correspondant au point mort bas du piston (70).

12. Turbomachine d'aéronef comprenant au moins un arbre et au moins un ensemble de lubrification selon la revendication 10 ou 11, dont la came est solidaire en rotation de l'au moins un arbre.

13. Turbomachine d'aéronef (10) selon la revendication 12, comprenant au moins trois pompes volumétriques (62a, 62b, 62c), les trois pompes volumétriques étant disposées en décalage de phase autour de l'arbre.

14. Turbomachine d'aéronef selon la revendication 12 ou 13, dans laquelle l'arbre est un arbre d'un réducteur de la turbomachine.

## Patentansprüche

1. Schmiermodul (60) für mindestens eine Schmierstation (84) einer Turbomaschine (10), wobei das Schmiermodul (60) mindestens eine Verdrängerpumpe (62), die einen Pumpenkörper (64) beinhaltet, der eine Hauptkammer (66), die dazu ausgestaltet ist, in Fluidkommunikation mit einem Hauptschmierkreislauf (86) zu sein, und eine Hilfskammer (68), die dazu ausgestaltet ist, in Fluidkommunikation mit einem Hilfsschmierkreislauf (88) zu sein, begrenzt und einen Kolben (70), der beweglich in dem Pumpenkörper (64) zwischen einer inaktiven Ausgestaltung und einer aktiven Ausgestaltung montiert ist, umfasst, wobei der Kolben (70) dazu ausgestaltet ist, in aktiver Ausgestaltung eine Pumpbewegung zwischen einem oberen Totpunkt und einem unteren Totpunkt durch Zusammenwirken mit einem Nocken (52) einer Welle der Turbomaschine zu bewirken und in inaktiver Ausgestaltung nicht mit dem Nocken (52) der Welle der Turbomaschine zusammenzuwirken, wobei die Verdrängerpumpe (62) ein Rückführelement (80) beinhaltet, das dazu ausgestaltet ist, den Kolben (70) in die aktive Ausgestaltung rückzuführen, und wobei sich der Kolben (70) in der Hauptkammer (66) erstreckt, sodass das Füllen der Hauptkammer (66) mit Schmierfluid über einen vorbestimmten Schwellenwert hinaus den Kolben (70) in die inaktive Ausgestaltung bringt.

2. Schmiermodul nach Anspruch 1, wobei in aktiver Ausgestaltung der Kolben (70) dazu ausgestaltet ist, das Fluid durch die Hilfskammer (68) zu pumpen.

3. Schmiermodul nach Anspruch 1 oder 2, wobei die aktive Ausgestaltung einer Autorotationsphase eines Lüfters der Turbomaschine (10) oder einer Leerlaufrotationsphase der Turbomaschine entspricht.

4. Schmiermodul nach einem der Ansprüche 1 bis 3, umfassend einen Zwischenspeicher (90), der auf dem Hilfsschmierkreislauf (88) zwischen der Schmierstation (84) und der Verdrängerpumpe (62) in der Zirkulationsrichtung des Schmierfluids angeordnet ist.

5. Schmiermodul nach Anspruch 4, wobei der Zwischenspeicher (90) zwischen der Schmierstation (84) und einer Pumpe (92) des Hauptschmierkreislaufs (86) in der Zirkulationsrichtung des Schmierfluids angeordnet ist.

6. Schmiermodul nach einem der Ansprüche 1 bis 5, wobei der Kolben (70) dazu ausgestaltet ist, in inaktiver Ausgestaltung die Zirkulation von Fluid durch die Hilfskammer (68) zu verhindern.

7. Schmiermodul nach einem der Ansprüche 1 bis 6, wobei der Kolben (70) dazu ausgestaltet ist, in aktiver Ausgestaltung die Zirkulation von Fluid durch die Hauptkammer (66) zu verhindern.

8. Schmiermodul nach einem der Ansprüche 1 bis 7, wobei die Hilfskammer (68) ein kleineres Volumen als das Volumen der Hauptkammer (66) aufweist.

9. Schmiermodul nach einem der Ansprüche 1 bis 8, wobei in inaktiver Ausgestaltung der Kolben (70) über den oberen Totpunkt und den unteren Totpunkt hinaus zurückgezogen ist, sodass er sich in Abstand zu dem Nocken (52) befindet.

10. Schmieranordnung (50), umfassend ein Schmiermodul (60) nach einem der Ansprüche 1 bis 9 und einen Nocken (52), der dazu ausgestaltet ist, auf einer Welle (36) der Turbomaschine montiert zu sein und mit dem Kolben (70) des Schmiermoduls (60) zusammenzuwirken.

11. Schmieranordnung nach Anspruch 10, wobei der Nocken (52) mindestens drei Hochpunkte (56) und drei Tiefpunkte (54) umfasst, wobei jeder Hochpunkt (56) dem oberen Totpunkt des Kolbens (70) entspricht und jeder Tiefpunkt (54) dem unteren Totpunkt des Kolbens (70) entspricht.

12. Turbomaschine eines Flugzeugs, umfassend mindestens eine Welle und mindestens eine Schmieranordnung nach Anspruch 10 oder 11, deren Nocken drehfest mit der mindestens einen Welle ist.

13. Turbomaschine eines Flugzeugs (10) nach Anspruch 12, umfassend mindestens drei Verdrängerpumpen (62a, 62b, 62c), wobei die drei Verdrängerpumpen phasenversetzt um die Welle angeordnet sind.

14. Turbomaschine eines Flugzeugs nach 12 oder 13, wobei die Welle eine Welle eines Untersetzungsgetriebes der Turbomaschine ist.

## Claims

1. A lubrication module (60) for at least one lubrication station (84) of a turbomachine (10), the lubrication module (60) comprising at least one positive displacement pump (62) including a pump body (64) delimiting a main chamber (66) configured to be in fluid communication with a main lubrication circuit (86) and an auxiliary chamber (68) configured to be in fluid communication with an auxiliary lubrication circuit (88), and a piston (70) movably mounted in the pump body (64) between an inactive configuration and an active configuration, the piston (70) being configured to perform, in the active configuration, a pumping movement between a top dead center and a bottom dead center by cooperation with a cam (52) of a shaft of the turbomachine and, in the inactive configuration, not cooperate with the cam (52) of the shaft of the turbomachine, the positive displacement pump (62) including a return element (80) configured to return the piston (70) to the active configuration, and the piston (70) extending into the main chamber (66) so that the filling of the main chamber (66) with lubricating fluid beyond a predetermined threshold brings the piston (70) into the inactive configuration.

2. The lubrication module according to claim 1, wherein, in the active configuration, the piston (70) is configured to pump the fluid through the auxiliary chamber (68).

3. The lubrication module according to claim 1 or 2, wherein the active configuration corresponds to a phase of windmilling of a fan of the turbomachine (10) or to a phase of idle rotation of the turbomachine.

4. The lubrication module according to any one of claims 1 to 3, comprising an intermediate tank (90) disposed on the auxiliary lubrication circuit (88), between the lubrication station (84) and the positive displacement pump (62) in the direction of circulation of the lubricating fluid.

5. The lubrication module according to claim 4, wherein the intermediate tank (90) is disposed between the lubrication station (84) and a pump (92) of the main lubrication circuit (86) in the direction of circulation of the lubricating fluid.

6. The lubrication module according to any one of claims 1 to 5, wherein the piston (70) is configured to prevent, in the inactive configuration, the circulation of fluid through the auxiliary chamber (68).

7. The lubrication module according to any one of claims 1 to 6, wherein the piston (70) is configured to prevent, in the active configuration, the circulation of fluid through the main chamber (66).

8. The lubrication module according to any one of claims 1 to 7, wherein the auxiliary chamber (68) has a volume smaller than the volume of the main chamber (66).

9. The lubrication module according to any one of claims 1 to 8, wherein, in the inactive configuration, the piston (70) is stowed beyond the top dead center and the bottom dead center so as to be at a distance from the cam (52).

10. A lubrication assembly (50) comprising a lubrication module (60) according to any one of claims 1 to 9 and a cam (52) configured to be mounted on a turbomachine shaft (36) and to cooperate with the piston (70) of the lubrication module (60).

11. The lubrication assembly according to claim 10, wherein the cam (52) comprises at least three top centers (56) and three bottom centers (54), each top center (56) corresponding to the top dead center of the piston (70) and each bottom center (54) corresponding to the bottom dead center of the piston (70).

12. An aircraft turbomachine comprising at least one shaft and at least one lubrication assembly according to claim 10 or 11, whose cam is secured in rotation to the at least one shaft.

13. The aircraft turbomachine (10) according to claim 12, comprising at least three positive displacement pumps (62a, 62b, 62c), the three positive displacement pumps being disposed in phase shift around the shaft.

14. The aircraft turbomachine according to claim 12 or 13, wherein the shaft is a shaft of a reduction gear of the turbomachine.
